# EUROPEAN PATENT APPLICATION

(11) **EP 1 460 008 A2**
(43) Date of publication of application: **22.09.2004**
(21) Application number: 04006277.0
(22) Date of filing: 17.03.2004
(51) Int. Cl.: B65G 67/00

(54) **Multifunctional platform to load and unload vehicles**

(30) Priority: 18.03.2003 IT MO20030077
(71) Applicant: C.L.M. S.r.l., 41030 Sorbara di Bomporto (Modena) (IT)
(72) Inventor: Baraldi, Andrea, 41100 Modena (IT); Baraldi, Gino, 41100 Villanova di Modena (IT); Baraldi, Walter, 41100 Modena (IT)
(74) Representative: Luppi, Luigi

(57) **Abstract**

The multifunctional platform (1) comprises a framework (2) that supports at the top a pair of horizontal tracks (103) that are provided at one end with respective ramps (104) connected to a floor plane (P); said framework (2) has uprights (102), longitudinal members (202) and crosspieces (302) that can be assembled together in a modular manner in a dismountable manner.

## Description

The present invention concerns a multifunctional platform for vehicles.

Platforms have some time been known and used that are used to load or unload the bodies of transport vehicles and also for performing maintenance operations on operating machines.

Said platforms essentially consist of a monobloc reticulated structure consisting of uprights and crosspieces that supports, at a preset height from the ground of about 1.30 metres a pair of parallel and horizontal tracks that at one end are provided with suitable access ramps for allowing the operating machines or forklift trucks or the like used to load or unload goods from said bodies to ascend or descend.

The above-mentioned platforms are, as said, monobloc and are made to measure for the customer to be placed in a prepared place inside the companies.

The dimensions supplied by the customers must therefore be such as to enable the above-mentioned platforms to be placed in a preset position within the company.

The dimensions supplied by the customers must therefore be such as to enable the platforms to be brought up substantially level with the loading planes of the bodies of the transport vehicle, which, however, as is known have dimensional and structural features and heights from the ground that are different from one another.

Furthermore, if used to carry out routine and special maintenance interventions, the platforms need to be positioned strategically inside the companies, i.e. sufficiently near the points supplying compressed air, water, accumulating and delivering lubricants and fuels to avoid having to provide the above in a systematically repeated manner and using personnel for that purpose.

A second need consists of the fact that when carrying out maintenance on operating machines, the personnel have to be able easily carry out their tasks, having the organs on which to perform the tasks at the most suitable height from the ergonometric point of view.

A third need is represented by the fact that the platforms must sometimes be shifted from their position and be relocated in another place inside the companies because, for example, of renovation work.

As the platforms are monobloc, there are noticeable problems in making the required shifts, both because of the overall dimensions and the weight of the platforms and because of the supports on the ground and therefore the stability of the entire structure which, in use, must bear significant loads, of both the static and dynamic types.

One object of the present invention is to meet the above needs by devising an improved multifunctional platform for vehicles.

A further object is to devise a platform that can be easily shifted.

Another object is to devise$ a platform that does not have problems of structural stability.

A yet further object is to devise a platform that enables operators concerned to perform maintenance tasks on operating machines in an easy manner.

Another further object is to devise a platform that can be used as a connecting element of the thresholds of the bodies of transport vehicles with the ground, in order that forklift trucks and the like can transit thereupon to load and unload goods.

According to the invention, a platform is provided for vehicles comprising a framework that supports at the top a substantially horizontal parking plane that is provided with at least one end with a ramp connected with a floor plane, characterised in that said framework has uprights, longitudinal members and crosspieces coupled together with movable coupling means.

In order that the invention may be clearly and completely disclosed, reference will now be made, by way of examples that do not limit the scope of the invention, to the accompanying drawings, wherein:
Figure 1 is a perspective view of a multifunctional platform for vehicles;
Figure 2 is a fragmentary schematic side view of an end portion of the platform in Figure 1 in a connection configuration with a body of a transport vehicle;

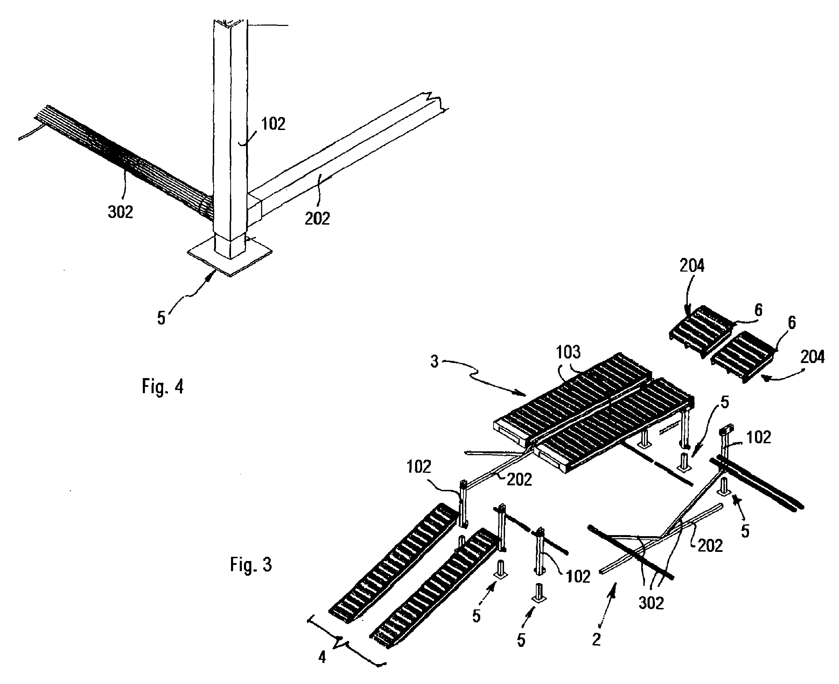

Figure 3 is an exploded view of the multifunctional platform in Figure 1;
Figure 4 is a perspective and fragmentary view on an enlarged scale of a detail of a bottom end of the framework of the platform in Figure 1;
Figure 5 is a fragmentary enlarged perspective view of a segment of prolongation of the multifunctional platform of Figure 1.

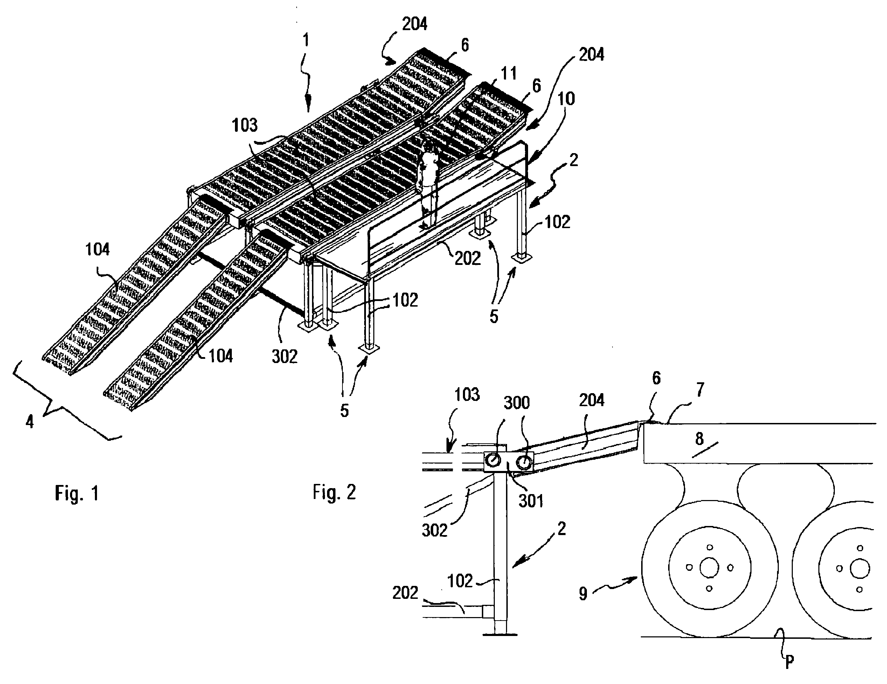

As shown in Figure 1, a multifunctional platform 1 for vehicles, which comprises a workframe 2 that supports a substantially horizontal plane 3 at the top.

The parking plane 3 is provided at one end with at least one ramp 4 connected to a floor plane P. The workframe 2 consists of uprights 102, longitudinal members 202 and crosspieces 302 that are assembled together in a modular manner with different means in such a way as to be able to be disassembled or reassembled according to necessity.

Furthermore, the uprights 102 are equipped with the respective bases of telescopic feet 5 of adjustable height.

The parking plane 3, in the preferred embodiment, consists of two tracks 103 that are parallel to and spaced between each other; each of these, on the opposite side from that of the connecting ramp 4, which also in this case consists of two tracks 104, and without substantial interruption, at least one respective extension segment 204 that is articulated rotating on a plane vertical to the concurring end of the parking plane 3, i.e. of the tracks 103, for example with a joined hinge system 300 with an articulated rod 301.

Each extension segment 204 is equipped at the end opposite the articulation end at the respective end of a track 103 with at least one lip 6 for resting at the thresholds 7 of the bodies 8 of transport vehicles 9.

The framework 2 is equipable, at least on one side, with footbridge means 10 designed for the positioning or walking of operators 11.

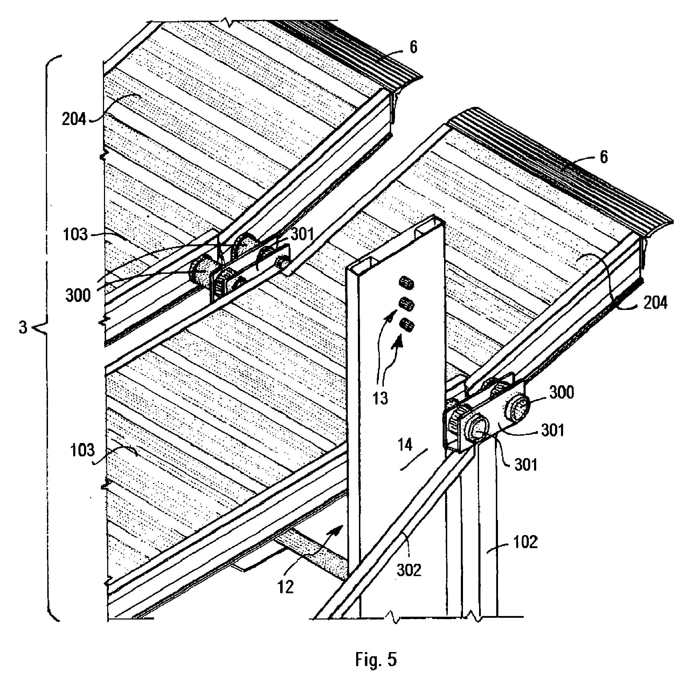

As shown in Figure 5, in a more complete embodiment of the multifunctional platform 1, the framework 2 is equipable with at least one column 12 whereupon fittings for taking and feeding fluids, liquids and electricity are fittable, that are indicated overall as 13, for the normal use of the multifunctional platform 1.

The column 12 comprises at least one column element 14 that is integrally connectable to the framework 2.

The operation of the invention is intuitively understandable from the previous disclosure and is as follows: to load or unload the body 8 of a transport vehicle 9 the threshold of the body 8 is brought up to align itself with the segments 204 until the lips 6 thereof are placeable on the threshold, as shown in Figure 2.

Loading or unloading operations can therefore be conveniently performed using a forklift truck or equivalent machine, which make ascend or descend the multifunctional platform 1 owing to the ramps 104 with which it is equipped.

Furthermore, the forklift trucks may also go onto the body 8 using the continuous connection provided by the segments 204.

A second possible use of the multifunctional platform 1 provides that on the parking plane 3 thereof an operating machine is positioned upon which to perform normal or special maintenance tasks.

Said machine is positioned on the parking plane 3 and one or more operators 11 can conveniently access the mechanical organs thereof, possible using footbridge means 10.

The operators 11 may have at their disposal a series of fittings 13 for the supply of water, oil, fuels, compressed air or other conventionally used fluids or of power sockets, advantageously positioned within reach of the operators 11, on the column 14 associable with the framework 2 that constitutes the multifunctional platform 1.

The framework 2 is demountable and is equipped with telescopic feet 5: for this reason, it does not pose levelling, positioning or removal and positioning constraints or constraints of removal and repositioning to more suitable places or also, if dismantled, of safekeeping and conservation with minimum dimensions.

Furthermore, to construct the elements that make it up, i.e. the uprights 102, longitudinal members 202 and crosspieces 302, light materials can be used, or materials with high mechanical resistance, to the complete advantage of the transportability of the multifunctional platform 1 wherever this is necessary, both for stable use and for provisional uses.

## Claims

1. Multifunctional platform (1) for vehicles comprising a framework (2) that supports at the top a substantially horizontal parking plane (3) provided at one end with at least one connecting ramp (4) with a floor plane (P), **characterised in that** said framework (2) has uprights (102), longitudinal members (202) and crosspieces (302) coupled together with movable coupling means.

2. Multifunctional platform (1) for vehicles according to claim 1 **characterised in that** said uprights (102) are equipped at their respective bases with telescopic feet (5) of adjustable height.

3. Multifunctional platform (1) for vehicles according to claim 1 **characterised in that** said parking plane (3) has, at one end opposite that of said substantially continuous connection ramp (4) at least one respective articulated angularly rotating extension segment (204).

4. Multifunctional platform (1) for vehicles according to claim 3 **characterised in that** said extension segment (204) is equipped at the end opposite the articulation end at the respective end of said plane (3), with at least one lip (6) resting on the thresholds (7) of bodies (8) of transport vehicles.

5. Multifunctional platform (1) for vehicles according to any one of the claims 1 to 4 **characterised in that** said parking plane (3) consists of at least two parallel tracks (103).

6. Multifunctional platform (1) for vehicles according to claim 1 **characterised in that** said framework (2) is equipable on at least one side with footbridge means (10) for operators.

7. Multifunctional platform (1) for vehicles according to claim 1 **characterised in that** said framework (2) is equipped with at least one column means (12) whereupon fittings (13) for taking and feeding fluids, liquids and electricity are provided.

8. Multifunctional platform (1) for vehicles according to claim 7 **characterised in that** said column means (12) comprises at least one column (14) element that is integrally connectable to said framework (2).
